Europäisches Patentamt

European Patent Office

Office européen des brevets

(11) Numéro de publication: **0 417 023 A1**

# DEMANDE DE BREVET EUROPEEN

(21) Numéro de dépôt: **90460030.1**

(22) Date de dépôt: **03.09.90**

(51) Int. Cl.5: **A01B 33/02, A01B 35/18**

(30) Priorité: **04.09.89 FR 8911684**

(43) Date de publication de la demande:
**13.03.91 Bulletin 91/11**

(84) Etats contractants désignés:
**AT BE DE DK ES FR GB IT NL SE**

(71) Demandeur: **Gicquel, Jean-Baptiste**
**Le Bourg**
**F-56120 Pleugriffet(FR)**

(72) Inventeur: **Gicquel, Jean-Baptiste**
**Le Bourg**
**F-56120 Pleugriffet(FR)**

(74) Mandataire: **Dubreuil, Annie et al**
**Cabinet Ballot-Schmit, Immeuble Le Suffren,**
**23 rue des Peupliers**
**F-56100 Lorient(FR)**

(54) Machine de préparation du sol avant ensemencement.

(57) Une machine selon l'invention comprend dans un châssis (1) deux rotors transversaux (7, 8) disposés l'un derrière l'autre. Chaque rotor (7, 8) comprend une pluralité de lames identiques réparties sur son pourtour et sur sa longueur. Elle ont une fonction de pénétration dans le sol à une profondeur sensiblement constante d'une de leur extrémité à l'autre, et de soulèvement de la terre vers l'arrière. Les lames du second rotor (8) ont pour fonction supplémentaire de casser les mottes soulevées par les lames du premier rotor(7).

La machine est utilisable pour effectuer simultanément le déchaumage et la préparation du sol avant ensemencement.

FIG. 1

# MACHINE DE PREPARATION DU SOL AVANT ENSEMENCEMENT

La présente invention concerne une machine agricole du type des pulvériseurs servant à travailler le sol avant l'ensemencement, notamment pour éliminer les mottes. Elle concerne plus particulièrement une machine utilisable pour effectuer simultanément ce travail et le déchaumage.

Il existe à ce jour des machines de ce type pour effectuer séparément l'une ou l'autre de ces tâches. Un déchaumeur connu et largement utilisé comprend une pluralité de rangées de disques transversales. Cette machine, uniquement conçue pour le déchaumage, n'effectue pas un émiettement suffisant des mottes, et un travail ultérieur de finition est toujours nécessaire.

Ce travail de finition peut être accompli au moyen d'une machine appelée cultivateur rotatif et comprenant un ou plusieurs rotors transversaux pourvus de doigts dirigés vers l'extérieur. Les rotors sont entraînés à partir de la prise de force d'un tracteur et la pulvérisation des mottes est réalisée entre les doigts de rotors adjacents. Outre le fait qu'elle réalise uniquement un travail de finition (après labour ou après déchaumage), cette machine a comme inconvénient important de n'être utilisable de façon efficace que si les conditions climatiques sont bonnes : si la terre est humide, il se produit du bourrage sur les doigts qui ne travaillent plus normalement.

L'objet de la présente invention est de prévoir une machine utilisable pour effectuer simultanément le déchaumage et le travail de préparation du sol avant ensemencement qui, de plus, ne présente pas l'inconvénient mentionné ci-dessus d'être très sensible aux conditions climatiques.

Pour répondre à cet objet, une machine selon l'invention est caractérisée en ce qu'elle comprend au moins deux rotors adjacents disposés transversalement l'un derrière l'autre, chaque rotor comprenant une pluralité de lames identiques de forme allongée réparties sur son pourtour et sur sa longueur, les lames ayant une fonction de pénétration dans le sol par un bord longitudinal, à une profondeur sensiblement constante d'une de leur extrémité à leur autre extrémité, et de soulèvement vers l'arrière de la terre, les lames du ou des rotors autres que le premier ayant pour fonction supplémentaire de casser les mottes soulevées vers l'arrière par les lames du rotor qui précède.

Dans une forme de réalisation préférée de l'invention, lesdites lames sont disposées obliquement par rapport à l'axe du rotor, de sorte que leur bord d'attaque entre progressivement dans la terre à mesure que le rotor tourne.

Les rotors peuvent être entraînés à partir de la prise de force d'un tracteur. Néanmoins, dans une forme de réalisation satisfaisante, le simple roulement des rotors sur le sol est suffisant. Dans tous les cas, un dispositif de transmission entre les rotors est éventuellement prévu pour assurer une vitesse de rotation plus élevée du ou des rotors autres que le premier.

L'invention sera mieux comprise à l'aide des explications qui vont suivre, et des dessins joints, dans lesquels :

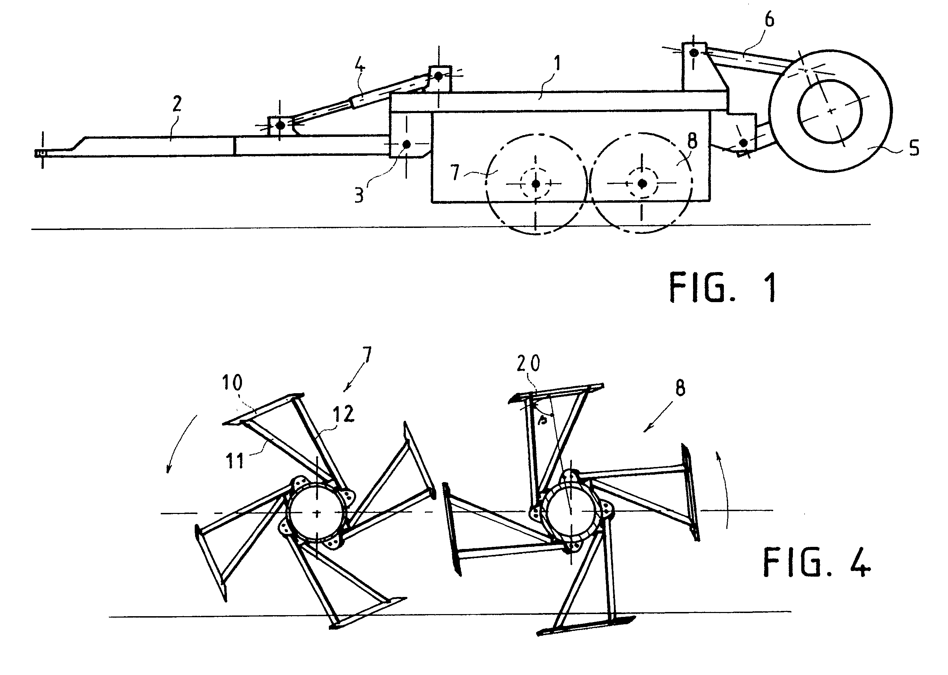

la Fig. 1 est une vue schématique de côté d'une machine selon l'invention,

la Fig. 2 est une vue schématique de dessus de la machine de la Fig. 1,

la Fig. 3 est vue de côté représentant schématiquement l'arrangement des lames sur le rotor avant de la machine des Figs. 1 et 2,

la Fig. 4 est une vue de côté schématique illustrant l'arrangement des rotors,

les Figs. 5 et 6 sont des vues schématiques, de dessus, représentant des socs pouvant être placés devant le premier rotor,

la Fig. 7 est une vue de côté du soc de la Fig. 6, et

la Fig. 8 est une vue schématique, en plan, d'une disposition de socs préférentielle dans une machine selon l'invention.

La machine représentée sur les dessins est une machine traînée comprenant un châssis 1 relié à un attelage 2; l'articulation 3 entre l'attelage et le châssis permettant de régler l'horizontalité de la partie fonctionnelle de la machine au moyen du vérin 4. A l'arrière du bâti 1, des roues 5 relevables avec un vérin 6 sont prévues pour le transport et, au travail, pour les changements de direction.

Le châssis 1 porte un rotor avant 7 et un rotor arrière 8. Les rotors 7 et 8 sont montés autour d'axes horizontaux perpendiculaires à la direction d'avancement. Dans la forme de réalisation montrée, ils sont au même niveau et ont le même diamètre extérieur, de manière à opérer sensiblement à la même profondeur, la profondeur de travail étant obtenue, soit par le poids de la machine que l'on augmente, si nécessaire, avec des masses d'alourdissement, ou bien par des roues de terrage placées à l'avant du premier rotor 7. De préférence, des moyens de protection tels que grillage sont prévus au-dessus des rotors 7 et 8, à des fins de sécurité.

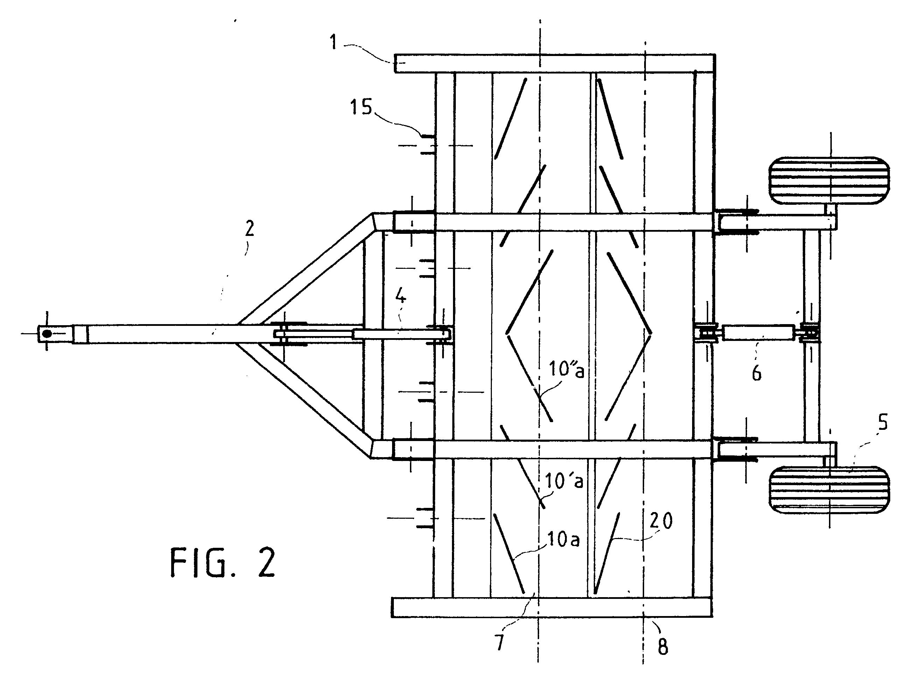

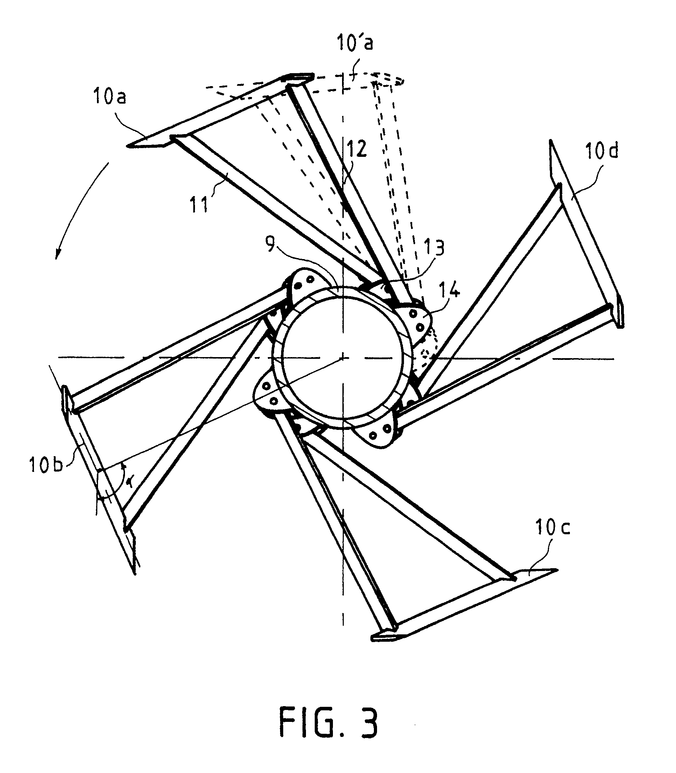

Comme le montrent mieux les Figs. 2 et 3, le rotor avant 7 comporte un arbre 9 sur lequel sont montées des lames 10, réparties sur la longueur en i groupes identiques, chaque groupe comprenant j lames régulièrement placées sur le pourtour, avec ici i = 6 et j = 4. A la Fig. 3, un groupe de lames du rotor 7 est représenté en traits pleins, ainsi qu'une lame d'un groupe adjacent en traits interrompus.

Dans ledit groupe, les quatres lames 10a, 10b, 10c, 10d ont respectivement leurs extrémités de droite et leurs extrémités de gauche dans deux plans perpendiculaires à l'axe du rotor. Elle consistent en des plaquettes longitudinales de forme rectangulaire dont le bord d'attaque est tranchant. Chaque lame est reliée à l'arbre 9 par deux bras latéraux 11 et 12 soudés près de chaque extrémité et maintenus dans des chapes respectives 13 et 14 solidaires de l'arbre 9.

Comme le montrent les dessins, les lames ont toutes la même disposition par rapport à l'axe du rotor, à savoir une disposition oblique selon laquelle, en tout point de leur longueur, elles sont à une distance sensiblement constante de l'axe. En d'autre termes, les extrémités de chaque lame se trouvent à égale distance de l'axe, mais sont décalées angulairement. Ainsi, en travail, les lames entrent dans la terre par leur extrémité la plus avancée dans le sens de rotation, puis la pénétration se poursuit progressivement le long du bord d'attaque jusqu'à l'autre extrémité. L'efficacité d'une lame ainsi disposée par rapport à une lame parallèle à l'axe du rotor est considérablement augmentée.

Ce pouvoir de pénétration dépend également de l'angle selon lequel la lame attaque le sol. De préférence, cet angle est voisin de 90°, ce qui donne, en pratique, une inclinaison des lames dans leur direction transversale pour laquelle l'angle $\alpha$, Fig. 3, a une valeur relativement voisine de 120°.

On notera par ailleurs que, de préférence, le rotor 7 se divise de part et d'autre de son milieu en une partie de droite et une partie de gauche dans lesquelles l'obliquité des lames est inversée, à savoir que si dans la partie de droite, les extrémités de gauche des lames sont en avance dans le sens de rotation sur les extrémités de droite, dans la partie de gauche, ce sont les extrémités de droite des lames qui sont en avance sur les extrémités de gauche. Avec un tel arrangement, les efforts sur le rotor au travail sont répartis de façon symétrique par rapport à l'axe longitudinal de la machine qui, par conséquent, reste bien en ligne derrière le tracteur.

Les bras 11, 12 supportant les lames 10 sont, de préférence, prévus dans des plans longitudinaux non verticaux (en considérant l'axe du rotor horizontal), de manière à ce qu'ils rencontrent obliquement des obstacles tels que cailloux présents sur le sol. Sont ainsi évités des soubresauts de la machine et, par suite, des irrégularités du travail, du fait que lesdits obstacles, au lieu d'être franchis par les bras 11 et 12, sont chassés sur le côté.

On voit, d'autre part, aux Figs. 2 et 3 que dans les groupes de lames successifs du rotor 7, les lames correspondantes telles que 10a, 10′a, 10″a sont légèrement décalées angulairement d'un groupe au groupe adjacent. On assure ainsi un roulement sans à-coup du rotor, du fait qu'en un lieu quelconque sur la longueur du rotor, quand une lame sort de terre, une lame voisine y est suffisamment engagée.

Le rotor arrière 8 est semblable mais non identique au rotor 7. Ses lames 20 sont arrangées de la même façon que sur le rotor 7, mais en opposition. Cela signifie que si l'extrémité droite de lames du rotor 7 est en position avancée par rapport à leur extrémité gauche, on a la disposition contraire dans le rotor 8 pour les lames correspondantes. Ainsi, lorsqu'elles se croisent, les lames des deux rotors sont sensiblement parallèles, de sorte que les lames 20 du rotor arrière agissent efficacement sur la terre soulevée par les lames 10 du rotor avant. Par voie de conséquence, si comme on l'a précisé précédemment à propos d'une forme de réalisation préférée, le rotor 7 comporte deux parties droite et gauche dans lesquelles l'obliquité des lames est inversée, il en est de même pour le rotor 8, comme le montre la Fig. 2. D'autre part, l'angle $\beta$ d'inclinaison transversale des lames du rotor 8 est déterminé également en vue de cette efficacité d'action sur la terre soulevée par les lames du rotor avant. De préférence, afin d'avoir un bon effet de tranchant sur les mottes, on cherche à ce que les lames du rotor arrière 8 se présentent sensiblement perpendiculairement à celles-ci, et l'angle $\beta$ correspondant est voisin de 90°.

Dans l'exemple illustré, les enveloppes cylindriques des rotors 7 et 8 ont des rayons égaux et leur rotation étant assurée par roulement sur le sol, ils tournent à la même vitesse. Dans une variante, une liaison par pignon ou équivalent est prévue entre le rotor avant 7 et le rotor arrière 8, afin d'assurer une vitesse de rotation plus élevée de ce dernier. Dans ce cas, le rayon du rotor 8 est, de préférence, plus petit que celui du rotor 7, afin d'en diminuer la profondeur de pénétration dans le sol et, par conséquent, l'effort d'entraînement du rotor avant 7. La vitesse de rotation accrue du rotor arrière 8 augmente sensiblement l'effet de pulvérisation sur les mottes soulevées par le rotor avant 7.

Au cas où une machine selon l'invention comporte plus de deux rotors successifs, par exemple trois, le deuxième rotor, en plus d'agir sur la terre soulevée par le premier, accomplit la même fonction que celui-ci par rapport au troisième rotor, à savoir soulever la terre vers l'arrière de manière qu'elle soit reprise par les lames du troisième rotor. Dans une telle forme de réalisation, la terre est en quelque sorte soumise à un double traitement.

La machine telle que représentée dans les dessins est utilisée pour préparer le sol après un labour. On peut lui adjoindre, à l'arrière, des outils connus tels que rouleau niveleur et/ou semoir.

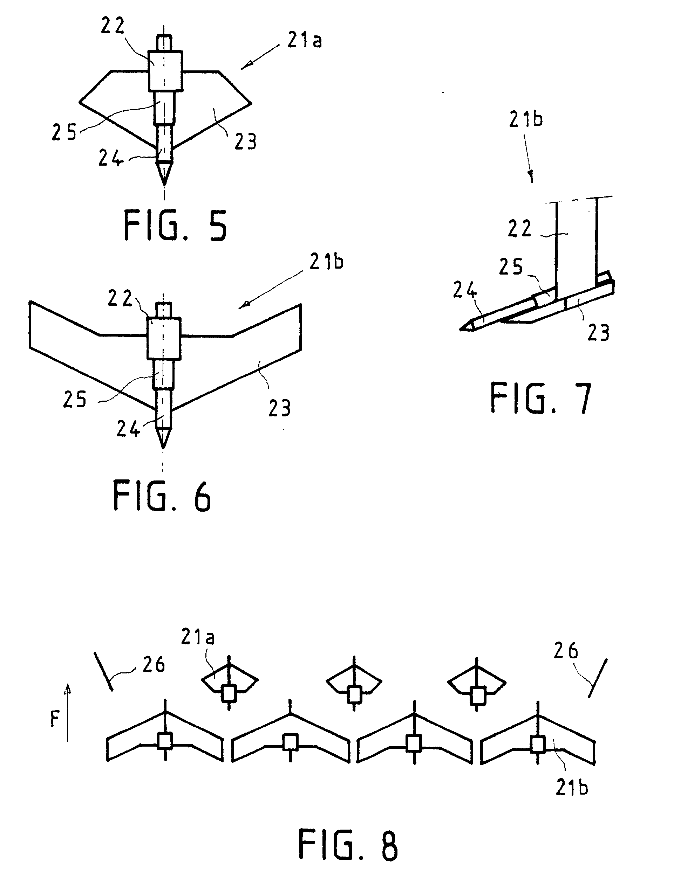

A l'avant, des montures telles que 15 à la Fig. 2 sont prévues pour recevoir des socs aptes à assurer notamment le déchaumage. Deux formes de réalisation de ces socs, repérées respectivement 21a et 21b, sont représentées aux Figs. 5 à 8. Elles comportent, fixés à un montant 22, deux ailerons jointifs symétriques 23 fuyant vers l'arrière et inclinés longitudinalement comme montré à la Fig. 7, selon un angle de l'ordre de 20°. Une pointe médiane 24 dépasse à l'avant des ailerons 23. Elle est de préférence fixée dans un fourreau 25, de manière à être réglable en translation.

Les socs 21a et 21b diffèrent essentiellement par la forme et la longueur des ailerons 23. Sensiblement en forme de delta, les ailerons du soc 21a sont moins longs que ceux du soc 21b, lesquels sont pratiquement des parallélogrammes.

On peut utiliser indifféremment les socs 21a ou 21b. Toutefois, on obtient des résultats particulièrement satisfaisants en les arrangeant en combinaison, selon la configuration en deux rangées de la Fig. 8 où la flèche F indique l'avant de la machine. Adjacente au premier rotor, non représenté, l'une des deux rangées est constituée de socs 21b dont les extrémités voisines sont très rapprochées. Devant, des socs 21a disposés en quinconce avec les socs 21b forment l'autre rangée. Des déflecteurs 26 peuvent en outre être prévus aux extrémités de cette rangée de socs 21a.

De préférence, les ailerons 21b sont réglés pour pénétrer plus profondément la terre que les socs 21a. La double rangée de socs, en plus d'être apte à assurer le déchaumage, réalise un travail préalable qui favorise l'action des rotors. Avec une machine ainsi équipée, et à l'arrière de laquelle est adjoint un semoir, les trois opérations de déchaumage, préparation du sol et ensemencement peuvent être effectuées en un seul passage.

La machine de l'invention permet donc des économies importantes, notamment en temps de travail. Par ailleurs, des essais ont permis de constater que son efficacité était satisfaisante en terre humide. De plus, un autre avantage important de la machine de l'invention réside dans le fait qu'elle n'est un engin ni lourd, ni complexe puisque, dans sa forme de réalisation préférée, elle comprend seulement deux rotors pour lesquels, de plus, des moyens d'entraînement en rotation ne sont pas nécessaires.

## Revendications

1) Machine de préparation du sol avant ensemencement, caractérisée en ce qu'elle comprend au moins deux rotors adjacents (7, 8) disposés transversalement l'un derrière l'autre, chaque rotor comprenant une pluralité de lames identiques de forme allongée réparties sur son pourtour et sur sa longueur, les lames ayant une fonction de pénétration dans le sol par un bord longitudinal, à une profondeur sensiblement constante d'une de leur extrémité à leur autre extrémité, et de soulèvement vers l'arrière de la terre, les lames (20) du ou des rotors (8) autres que le premier rotor (7) ayant pour fonction supplémentaire de casser les mottes soulevées vers l'arrière par les lames du rotor qui précède.

2) Machine selon la revendication 1, caractérisée en ce que les lames (10 ou 20) de chaque rotor (7 ou 8) sont disposées obliquement par rapport à l'axe du rotor, de sorte que leur bord d'attaque entre progressivement dans la terre à mesure que le rotor tourne.

3) Machine selon la revendication 2, caractérisée en ce que chaque rotor (7 ou 8) se divise en deux parties de part et d'autre de son milieu, l'obliquité des lames de la partie de gauche étant inversée par rapport à l'obliquité des lames de la partie de gauche.

4) Machine selon la revendication 2 ou 3, caractérisée en ce que les lames de chaque rotor et les lames d'un rotor adjacent sont disposées obliquement de façon inversée, de manière à être sensiblement parallèles lorsqu'elles se croisent.

5) Machine selon l'une des revendications 1 à 4, caractérisée en ce que, dans chaque rotor (7 ou 8), les lames (10 ou 20) sont réparties longitudinalement en i groupes identiques de j lames, dans chaque groupe, les extrémités de droite et les extrémités de gauche des lames étant respectivement dans deux plans perpendiculaires à l'axe du rotor, les lames correspondantes (10a, 10'a) dans deux groupes adjacents étant par ailleurs légèrement décalées angulairement.

6) Machine selon l'une des revendications 1 à 5, caractérisée en ce que l'inclinaison transversale des lames (10) du premier rotor (7) est telle que lesdites lames attaquent le sol de façon sensiblement perpendiculaire.

7) Machine selon l'une des revendications 1 à 6, caractérisée en ce que l'inclinaison transversale des lames des rotors autres que le premier rotor (7) est telle que lesdites lames rencontrent sensiblement perpendiculairement la terre soulevée par les lames du rotor qui précède.

8) Machine selon l'une des revendications 1 à 7, caractérisée en ce que dans les rotors, chaque lame est fixée à l'arbre (9) dudit rotor par deux bras latéraux (11, 12) qui se trouvent dans des plans longitudinaux obliques par rapport à l'axe du rotor.

9) Machine selon l'une des revendications 1 à 8, caractérisée en ce qu'un dispositif de transmission est prévu entre le premier rotor (7) et les rotors suivants, afin de conférer à ceux-ci une vitesse de rotation plus élevée.

10) Machine selon l'une des revendications 1 à 9, caractérisée en ce que les rotors sont entraînés en rotation à partir de la prise de force d'un tracteur.

11) Machine selon l'une des revendications 1 à 10, caractérisée en ce qu'elles comporte des montures (15) à l'avant du bâti (1), aptes à recevoir de façon amovible des socs (21a et/ou 21b).

12) Machine selon la revendication 11, caractérisée en ce que lesdits socs (21a, 21b) comportent, fixés à un montant (22), deux ailerons jointifs symétriques (23) fuyant vers l'arrière et inclinés longitudinalement selon un angle d'environ 20°, ainsi qu'une pointe médiane (24) dépassant devant les ailerons (23).

13) Machine selon la revendication 11 ou 12, caractérisée en ce qu'elle comporte une rangée, adjacente au premier rotor, de socs (21b) dont les extrémités voisines sont rapprochées et, devant les socs (21b), une rangée de socs (21a) de moindre envergure, disposés en quinconce avec les socs (21b).

14) Machine selon la revendication 13, caractérisée en ce que les socs (21a) sont réglés pour travailler plus superficiellement que les socs (21b).

15) Machine selon l'une des revendications 1 à 14, caractérisée en ce qu'elle comprend des moyens pour lui associer, à l'arrière, des accessoires tels que rouleau niveleur et/ou semoir.

FIG. 1

FIG. 4

EP 0 417 023 A1

FIG. 2

EP 0 417 023 A1

FIG. 3

FIG. 5

FIG. 6

FIG. 7

FIG. 8

**Office européen
des brevets**

**RAPPORT DE RECHERCHE
EUROPEENNE**

Numéro de la demande

**EP 90 46 0030**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y | GB-A-1 156 396 (FMC CORP.)<br>* page 2, lignes 19 - 121; figures 2, 10 * | 1,7,9.,2,3,<br>5,11,15. | A 01 B 33/02<br>A 01 B 35/18 |
| Y | US-A-2 776 533 (P.E.YACOBY)<br>* colonne 4, ligne 55 - colonne 5, ligne 11; figures 2, 7. * | 2,3,5,11,<br>15. | |
| X | EP-A-0 035 843 (BOMFORD & EVERSHED LTD.)<br>* page 7, ligne 15 - page 8, ligne 7; figures 5, 6, 7. * | 1,9,10,15. | |
| A | FR-A-2 354 690 (TEXAS INDUSTRIES INC.)<br>* page 7, ligne 15 - page 8, ligne 28; figures 8, 9. * | 12-14. | |
| A | US-A-4 077 477 (C. VAN DER LELY)<br>* colonne 1, ligne 49 - colonne 4, ligne 28; figures 1-3 * | 1,2,3,15. | |
| A | US-A-1 830 565 (J.SCHAEFFERS)<br>* pages 1 - 2; figures 2, 3 * | 8. | |

| | DOMAINES TECHNIQUES RECHERCHES (Int. Cl.5) |
|---|---|
| | A 01 B |

Le présent rapport de recherche a été établi pour toutes les revendications

| Lieu de la recherche | Date d'achèvement de la recherche | Examinateur |
|---|---|---|
| La Haye | 04 décembre 90 | WOHLRAPP R.G. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons

& : membre de la même famille, document
correspondant